# EUROPÄISCHE PATENTSCHRIFT

(11) **EP 1 872 632 B1**
(45) Veröffentlichungstag und Bekanntmachung des Hinweises auf die Patenterteilung: **01.07.2009**
(21) Anmeldenummer: 06722659.7
(22) Anmeldetag: 22.03.2006
(51) Int. Cl.: H05B 41/392, H05B 41/282

(54) **ELEKTRONISCHES VORSCHALTGERÄT MIT PHASENDIMMERERKENNUNG**
ELECTRONIC BALLAST WITH PHASE DIMMER DETECTION
BALLAST ELECTRONIQUE A RECONNAISSANCE DE GRADATEUR A ANGLE DE PHASE

(30) Priorität: 22.04.2005 DE 102005018793
(43) Veröffentlichungstag der Anmeldung: 02.01.2008
(73) Patentinhaber: Osram Gesellschaft mit beschränkter Haftung, 81543 München (DE)
(72) Erfinder: FISCHER, Klaus, 86316 Friedberg (DE); KREITTMAYR, Josef, 86399 Bobingen (DE)
(86) Internationale Anmeldenummer: PCT/DE2006/000506
(87) Internationale Veröffentlichungsnummer: WO 2006/111120

(56) Entgegenhaltungen:
- EP-A- 0 450 728
- EP-A- 0 769 855
- EP-A- 1 465 330
- US-A1- 2002 033 679

## Beschreibung

### Technisches Gebiet

Die vorliegende Erfindung bezieht sich auf ein elektronisches Vorschaltgerät mit einem Konverter zum Betrieb einer Entladungslampe, beispielsweise einer Niederdruckentladungslampe, zum wahlweisen Betrieb direkt am Versorgungsnetz oder an einem Phasenanschnittdimmer.

### Stand der Technik

Elektronische Vorschaltgeräte zum Betrieb von Entladungslampen sind in vielfältigen Ausführungen bekannt. I.d.R. enthalten sie eine Gleichrichterschaltung zur Gleichrichtung einer Wechselspannungsversorgung und Aufladen eines häufig als Zwischenkreiskondensator bezeichneten Kondensators. Die an diesem Kondensator anliegende Gleichspannung dient zur Versorgung eines Wechselrichters bzw. Inverters (im Folgenden Inverter), der die Entladungslampe betreibt. Grundsätzlich erzeugt ein Inverter aus einer gleichgerichteten Wechselspannungsversorgung oder einer Gleichspannungsversorgung eine Versorgungsspannung für die mit hochfrequentem Strom zu betreibende Entladungslampe. Ähnliche Vorrichtungen sind auch für andere Lampentypen bekannt, beispielsweise in Form von elektronischen Transformatoren für Halogenlampen.

Unter "Konverter" werden im Folgenden Einrichtungen verstanden, die geeignet sind, eine Eingangsspannung in eine Ausgangsspannung mit einem anderen zeitlichen Verlauf umzuwandeln. Insbesondere können dies Tiefsetzsteller, Inverswandler oder Hochsetzsteller sein.

Hochsetzstellerschaltungen zur Netzstromoberschwingungsreduzierung sind an sich bekannt. Hochsetzsteller weisen eine Speicherdrossel, ein Schaltelement, eine Diode und einen Zwischenkreiskondensator auf. Der Zwischenkreiskondensator versorgt eine Entladungslampe über eine Inverterschaltung.

Ein solcher Hochsetzsteller arbeitet wie folgt: Die Netzwechselspannung wird in einem Gleichrichter in eine pulsierende Gleichspannung umgewandelt. Zwischen ein Versorgungspotential dieser pulsierenden Gleichspannung und den Zwischenkreiskondensator ist die Speicherdrossel und die Diode geschaltet. Das Schaltelement sorgt im eingeschalteten Zustand für einen ansteigenden Stromfluss in der Speicherdrossel bis zu einem einstellbaren Wert, der Abschaltstromschwelle. Die Diode leitet nach dem Ausschalten des Schaltelementes den in der Speicherdrossel eingeprägten Strom in den Zwischenkreiskondensator.

Der Einsatz eines Hochsetzstellers in einem Vorschaltgerät für eine Entladungslampe wird in der EP 1 465 330 A2 beschrieben.

Phasenanschnittdimmer zur Leistungssteuerung sind ebenfalls bekannt. Phasenanschnittdimmer liefern eine periodische Netzversorgung an die Last. In jeder Halbperiode wird die Netzversorgung aber erst nach einer einstellbaren Zeit an die Last geliefert.

Die EP 0 450 728 A2 offenbart ein Vorschaltgerät für Leuchtstofflampen, das an zwei unterschiedlichen Spannungsquellen betrieben werden kann. Insbesondere kann das Vorschaltgerät entweder an eine erste Wechselspannungsquelle mit einer ersten Frequenz oder an eine zweite Wechselspannungsquelle mit einer zweiten Frequenz angeschlossen werden, um die Leuchtstofflampe entweder mit ihrem Nennlichtstrom oder mit einem geringeren Lichtstrom zu betreiben.

Die EP 0 769 855 A1 offenbart eine Schaltungsanordnung zum Betrieb einer Entladungslampe mit ersten Mitteln zum Nachweis periodischer Stromimpulse, deren Amplitude größer ist als ein vorgegebener Wert W1, und mit zweiten Mitteln zur Änderung des Betriebsstatus der Schaltungsanordnung, die an die ersten Mittel gekoppelt sind.

### Darstellung der Erfindung

Der Erfindung liegt das technische Problem zugrunde, ein im Hinblick auf die Einsetzbarkeit mit und ohne Phasenanschnittdimmer verbessertes elektronisches Vorschaltgerät anzugeben.

Diese Erfindung betrifft ein elektronisches Vorschaltgerät mit einem als Hochsetzsteller ausgebildeten Konverter zum wahlweisen Betrieb einer Entladungslampe direkt an einer Netzversorgung oder an einem Phasenanschnittdimmer, welches dazu ausgelegt ist, dass Sprünge in der Versorgungsspannung durch mindestens einen zwischen eine Netzleitung und das Bezugspotential des Vorschaltgerätes angeschlossenen Differenzierer ausgekoppelt und an eine Steuerung des Vorschaltgerätes gegeben werden, so dass die Steuerung zwischen dem Betrieb am Phasenanschnittdimmer und an der Netzversorgung unterscheiden kann, wobei die Steuerung den Hochsetzsteller so steuert, dass dieser beim Betrieb an der Netzversorgung, ansprechend auf eine Erkennung des Betriebes an der Netzversorgung durch die Steuerung, eine geringere Abschaltstromschwelle aufweist, so dass der Hochsetzsteller einen Strom niedrigerer Amplitude aus der Netzversorgung aufnimmt als beim Betrieb an dem Phasenanschnittdimmer

Bevorzugte Ausgestaltungen der Erfindung sind in den abhängigen Ansprüchen angegeben und werden im Folgenden näher erläutert. Die Offenbarung bezieht sich dabei stets sowohl auf die Verfahrenskategorie als auch die Vorrichtungskategorie der Erfindung.

Die Erfindung beruht auf der Erkenntnis, dass es oft wünschenswert ist, Konverter, darunter Hochsetzsteller, wahlweise direkt an der Netzversorgung oder an einem Phasenanschnittdimmer zu betreiben. Dabei muss der Konverter eventuell seinen Betrieb an eine Versorgung mit oder ohne Phasenanschnittdimmer anpassen. Dies kann beispielsweise der Fall sein, wenn der Betrieb des Konverters in einem der beiden Fälle nicht normenkonform in Bezug auf Netzstromoberschwingungen ist oder der Konverter in einem der beiden Fälle ohne eine Umstellung seines Betriebes nicht effektiv arbeitet. Dem elektronischen Vorschaltgerät muss es dann möglich sein, zu erkennen, ob es direkt an der Netzversorgung oder an einem Phasenanschnittdimmer betrieben wird; es können sich dann entsprechende Betriebsparameter einstellen.

Der Betrieb an einem Phasenanschnittdimmer verändert die an dem elektronischen Vorschaltgerät anliegende Versorgungsspannung in charakteristischer Weise. Dies wird von der Erfindung ausgenutzt. Phasenanschnittdimmer liefern die Netzversorgung erst nach einer einstellbaren Zeit innerhalb einer jeden Netzhalbwelle an das Vorschaltgerät. Während des Phasenanschnittes liegt keine Eingangsspannung an dem Vorschaltgerät an. Nach diesem Zeitpunkt liegt in etwa die ursprüngliche Versorgungsspannung an. Die Spannung am Eingang des elektronischen Vorschaltgerätes weist im Anschluss an den Phasenanschnitt eine steile Flanke auf; es treten Sprünge in der Versorgungsspannung auf.

Die Erfindung weist einen zwischen eine Netzleitung und das Bezugspotential des Vorschaltgerätes angeschlossenen Differenzierer auf. Dieser Differenzierer koppelt die Spannungssprünge in der Versorgungsspannung aus. An seinem Ausgang treten im Falle eines Spannungssprunges betragsmäßig relativ große Spitzenspannungen auf. Diese Spitzenspannungen können nach einer eventuellen Weiterverarbeitung, beispielsweise in Form einer Spitzenwerterkennung, einer Steuerschaltung des Konverters zugeführt werden, welche dann die Betriebsparameter des Konverters entsprechend einstellen kann.

Bei dem Konverter des erfindungsgemäßen Vorschaltgeräts handelt es sich um einen Hochsetzsteller. Beim wahlweisen Betrieb von Hochsetzstellern an einem Phasenanschnittdimmer oder direkt an der Netzversorgung ergeben sich besondere Probleme. Ist beispielsweise der Hochsetzsteller ausschließlich auf den Betrieb an einem Phasenanschnittdimmer, wie der aus der EP 1 465 330 A2, ausgelegt; so kann hier bei fehlendem Phasenanschnittdimmer folgendes Problem auftreten: Ab dem Zeitpunkt innerhalb einer Netzhalbwelle des Versorgungsnetzes, zu dem der Zwischenkreiskondensator ausreichend aufgeladen ist, wird üblicherweise die Stromzufuhr der Entladungslampe während der verbleibenden Zeit dieser Halbwelle unterbrochen. Da ein Phasenanschnitt beim direkten Betrieb am Versorgungsnetz fehlt, ist es möglich, dass schon relativ früh innerhalb einer Netzhalbwelle der Hochsetzsteller keinen weiteren Strom aufnimmt. Der Leistungsfaktor als Quotient aus Wirkleistung und Scheinleistung ist klein. Weiter muss unter anderem nach der Norm IEC 61000-3-2 eine Stromaufnahme über 90° Phasenlage hinaus sichergestellt sein.

Vorzugsweise detektiert das elektronische Vorschaltgerät mittels des Differenzierers, ob ein Phasenanschnittdimmer vorgeschaltet ist. Arbeitet das Vorschaltgerät direkt an der Netzversorgung, werden die Betriebsparameter des Hochsetzsteller so eingestellt, dass dieser normenkonform arbeiten kann. Dies kann durch eine Absenkung der Abschaltstromschwelle des Hochsetzstellers geschehen. Der Hochsetzsteller nimmt dann einen Strom niedrigerer Amplitude auf. Um den Zwischenkreiskondensator auf seinen Maximalwert aufzuladen, wird nun über einen längeren Zeitraum innerhalb einer Netzhalbwelle Strom von dem Hochsetzsteller aufgenommen. Die Abschaltstromschwelle kann, um der Norm zu entsprechen, so eingestellt werden, dass die Stromaufnahme des Hochsetzstellers sich bis jenseits der 90° Phasenlage erstreckt.

Je länger das Zeitintervall der Stromaufnahme innerhalb einer Netzhalbwelle ist, desto größer ist auch der Leistungsfaktor des Vorschaltgerätes. Vorzugsweise sind die Betriebsparameter - insbesondere die Abschaltstromschwelle - des Hochsetzstellers so eingestellt, dass die Stromaufnahme in Abwesenheit eines Phasenanschnittdimmers mindestens während der Hälfte der Dauer einer Netzhalbwelle erfolgt.

Bei einer bevorzugten Ausführungsform der Erfindung sind die Betriebsparameter des Hochsetzstellers so eingestellt, dass die Amplitude des aufgenommenen Stromes proportional zur momentan anliegenden Netzspannung ist. Mit dieser Wahl werden besonders wenig Netzoberschwingungen erzeugt. Diese Einstellung ist sinnvoll sowohl beim Betrieb mit Phasenanschnittdimmer als auch ohne. Während des Phasenanschnittes wird dann natürlich kein Strom von dem Hochsetzsteller aufgenommen.

Bei einer besonders einfachen und daher bevorzugten Ausführungsform der Erfindung weist der Differenzierer eine Serienschaltung aus einem Kondensator und einem Widerstand auf. Diese Serienschaltung kann an eine der Netzleitungen in Serie zum Bezugspotential des elektronischen Vorschaltgerätes geschaltet werden. Von dem Knoten zwischen dem Widerstand und dem Kondensator kann ein weiterer Kondensator zu der anderen Netzleitung geschaltet werden. An dem Widerstand liegt bei geeigneter Dimensionierung von Kapazität und Widerstand eine zur differenzierten Versorgungsspannung proportionale Spannung an. Ein Vorteil dieser einfachen Implementierung ist die geringe Anzahl an benötigten Bauteilen.

Vorzugsweise ist zu dem Widerstand aus der im vorstehenden Absatz beschriebenen Differenziererschaltung eine Spitzenwerterfassungsschaltung parallel geschaltet. Wird der Hochsetzsteller an einem Phasenanschnittdimmer betrieben, so kann mit dem über dem Widerstand erfassten Spitzenwert die Steuerung des Hochsetzstellers angesteuert werden, beispielsweise mittels eines an die Spitzenwerterfassung angeschlossenen Schaltelementes.

### Kurze Beschreibung der Zeichnungen

Im Folgenden soll die Erfindung anhand eines Ausführungsbeispieles näher erläutert werden. Die dabei offenbarten Einzelmerkmale können auch in anderen Kombinationen erfindungswesentlich sein. Die vorstehende und die folgende Beschreibung beziehen sich auf die Vorrichtungskategorie und die Verfahrenskategorie der Erfindung, ohne dass dies im Einzelnen noch explizit erwähnt wird.
- Figur 1: zeigt schematisch einen Hochsetzsteller als Teil eines elektronischen Vorschaltgerätes.
- Figur 2: zeigt eine Schaltungsanordnung zur Erkennung des Phasenanschnittes.

### Bevorzugte Ausführung der Erfindung

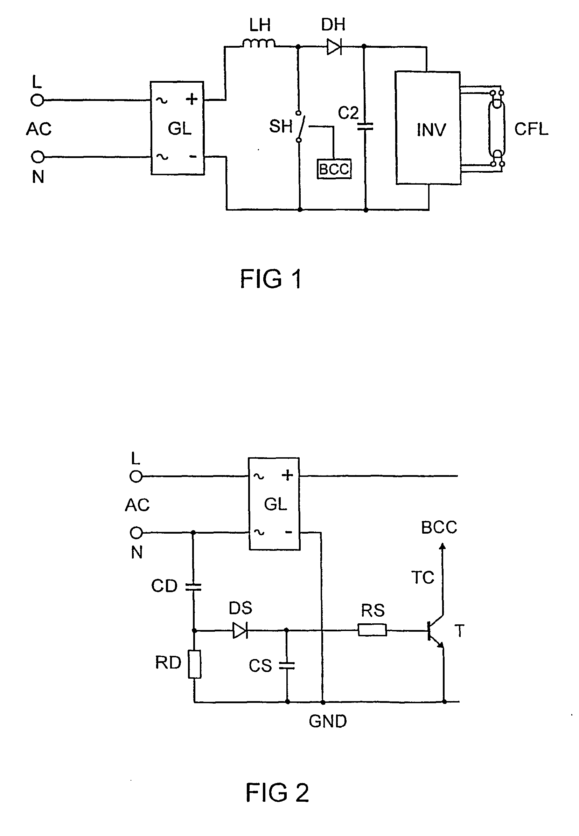

Figur 1 zeigt schematisch einen Hochsetzsteller als Teil eines elektronischen Vorschaltgerätes einer Kompakt-Leuchtstofflampe CFL.

Der Hochsetzsteller wird durch einen Zwischenkreiskondensator C2, eine Diode DH, eine Speicherdrossel LH und ein Schaltelement SH, hier einen MOSFET, sowie eine hier jedoch nur angedeutete Steuerschaltung BCC zur Ansteuerung des Schaltelementes SH gebildet.

Das elektronische Vorschaltgerät enthält einen Gleichrichter GL, über den der Zwischenkreiskondensator C2 über die Speicherdrossel LH und die Diode DH geladen wird. Der Zwischenkreiskondensator C2 versorgt eine Kompakt-Leuchtstofflampe CFL über eine Inverterschaltung INV. Der Inverter INV betreibt die Entladungslampe CFL mit einem hochfrequenten Strom. Der Hochsetzsteller stellt an seinem Zwischenkreiskondensator C2 die Betriebsspannung für den Inverter INV zur Verfügung. Die Erfindung bezieht sich in diesem Beispiel auf den Betrieb des Hochsetzstellers.

Die Schaltung arbeitet wie folgt: Die Netzwechselspannung AC wird in einem Gleichrichter GL in eine pulsierende Gleichspannung umgewandelt. In die positive Zuleitung sind die Speicherdrossel LH und die Diode DH geschaltet. Das Schaltelement SH sorgt im eingeschalteten Zustand für einen bis zu einem einstellbaren Wert ansteigenden Stromfluss (Abschaltstromschwelle) in der Speicherdrossel LH. Die Diode DH leitet nach dem Ausschalten des Schaltelementes SH den in der Speicherdrossel LH eingeprägten Strom in den Zwischenkreiskondensator C2.

Figur 2 zeigt eine erfindungsgemäße Schaltungsanordnung zur Erkennung, ob das elektronische Vorschaltgerät direkt am Versorgungsnetz oder an einem Phasenanschnittdimmer betrieben wird. Ein Kondensator CD wird als differenzierendes Element an eine der Netzzuleitungen N oder L geschaltet. In Serie zu diesem Kondensator CD wird ein Widerstand RD geschaltet, der den Kondensator CD mit dem Bezugspotential GND verbindet. An den Knoten zwischen dem Kondensator CD und dem Widerstand RD wird die Anode einer Diode DS geschaltet; deren Kathode wird in Serie mit einem weiteren Kondensator CS ebenfalls an das Bezugspotential GND geschaltet. Diese Schaltung stellt eine Spitzenwerterfassungsschaltung der über dem Widerstand RD auftretenden Spannung dar. An dem Knoten zwischen dem Kondensator CS und der Diode DS ist über einen Widerstand RS die Basis eines Transistors T angeschlossen. Dessen Emitter ist mit dem Bezugspotential GND und dessen Kollektor TC mit einem Eingang der Steuerschaltung BCC des Hochsetzstellers verbunden.

Wenn das elektronische Vorschaltgerät direkt an die Netzversorgung angel schlossen wird, treten keine wesentlichen Sprünge in der Versorgungsspannung auf. Die Bauteile der Schaltungsanordnung in Figur 2 sind so ausgelegt, dass der Spitzenwert der Spannung über dem Widerstand RD über die Diode DS in dem Kondensator CS gespeichert wird und die Spannung über dem Kondensator CS bei ungedimmter Netzversorgung den Transistor T nicht einschalten kann.

Wenn das elektronische Vorschaltgerät aber über einen Phasenanschnittdimmer an das Versorgungsnetz angeschlossen wird, zeigt die Versorgungsspannung deutliche Sprünge. In diesem Fall treten über dem Widerstand RD höhere Spitzenwerte auf, so dass der Kondensator CS im Vergleich zum Betrieb ohne Phasenanschnittdimmer auf deutlich höhere Werte aufgeladen wird. Die Spannung über dem Kondensator CS kann nun über den Widerstand RS den Transistor T in einen leitenden Zustand versetzen, womit der kollektorseitige Ausgang des Transistors TC ungefähr auf das Bezugspotential GND gelegt wird.

Ist die Abschaltstromschwelle des Hochsetzstellers herabgesetzt, so ist die Amplitude des aufgenommenen Stromes kleiner. Da der Zwischenkreiskondensator C2 allerdings trotzdem bis zu der selben gewünschten Spannung aufgeladen werden soll, nimmt der Hochsetzsteller in diesem Fall mit herabgesetzter Abschaltstromschwelle für eine längere Zeit Strom aus dem Netz auf. Der Leistungsfaktor ist damit größer als ohne Herabsetzten der Abschaltstromschwelle und der Hochsetzsteller kann normenkonform arbeiten.

Die hier beschriebene Erfindung kann in einem in der EP 1 465 330 A2 beschriebenen Hochsetzsteller eingesetzt werden. Der aus der EP 1 465 330 A2 bekannte Hochsetzsteller ist so ausgelegt, dass er beim direkten Betrieb am Versorgungsnetz zur Vermeidung von Netzstromoberschwingungen durch eine Steuerschaltung BCC ausgeschaltet wird. Dieser Hochsetzsteller weist daher eine Schaltungsvorrichtung zur Erkennung eines Phasenanschnittes auf. Die hier vorgestellte Vorrichtung zum Erkennen eines Phasenanschnittes kann vorteilhaft dazu eingesetzt werden, einen Phasenanschnitt zu detektieren und den Hochsetzsteller über die Steuerschaltung BCC, wie auch in der EP 1 465 330 A2 vorgeschlagen, auszuschalten.

Dabei ist die hier beschriebene Vorrichtung zur Erkennung eines Phasenanschnittes gegenüber der Lösung aus der EP 1 465 330 A2 weniger aufwendig und verbessert das Signal-zu-Rausch-Verhältnis.

Üblicherweise verursachen Phasenanschnittdimmer zumindest einen minimalen Phasenanschnitt in der Versorgung. Die Erkennung eines Phasenanschnittdimmers nach der EP 1 465 330 A2 basiert auf einem zu dem Phasenanschnitt proportionalen Signal. Dort wird für den minimal möglichen Phasenanschnitt ein eindeutiger Schwellenwert festgelegt. Angesichts der Vielfalt der sich auf dem Markt befindlichen Phasenanschnittdimmer ist dies schwierig. Das Signal-zu-Rausch-Verhältnis ist bei einem kleinem Phasenanschnitt schlecht; das zu dem Phasenanschnitt proportionale Signal kann sehr klein sein. Die Erfindung erlaubt eine wesentlich diskretere Erkennung eines Phasenanschnittes, denn auch schon bei einem sehr kleinen Phasenanschnitt liefert der Differenzierer relativ große Spitzenspannungen. Weiter erfordert die Schaltung aus der EP 1 465 330 A2 zumindest einen Komparator.

## Patentansprüche

1. Elektronisches Vorschaltgerät mit einem als Hochsetzsteller ausgebildeten Konverter (LH, DH, SH, C2) zum wahlweisen Betrieb einer Entladungslampe (CFL) direkt an einer Netzversorgung (AC) oder an einem Phasenanschnittdimmer, wobei Sprünge in der Versorgungsspannung durch mindestens einen zwischen eine Netzleitung (N, L) und das Bezugspotential (GND) des Vorschaltgerätes angeschlossenen Differenzierer (CD, RD) ausgekoppelt und an eine Steuerung (BCC) des Vorschaltgerätes gegeben werden, so dass die Steuerung (BCC) zwischen dem Betrieb am Phasenanschnittdimmer und an der Netzversorgung (AC) unterscheiden kann,
**dadurch gekennzeichnet, dass** die Steuerung (BCC) den Hochsetzsteller (LH, DH, SH, C2) so steuert, dass dieser beim Betrieb an der Netzversorgung (AC), ansprechend auf eine Erkennung des Betriebes an der Netzversorgung (AC) durch die Steuerung (BCC), eine geringere Abschaltstromschwelle aufweist, so dass der Hochsetzsteller (LH, DH, SH, C2) einen Strom niedrigerer Amplitude aus der Netzversorgung aufnimmt als beim Betrieb an dem Phasenanschnittdimmer.

2. Elektronisches Vorschaltgerät nach Anspruch 1, bei dem beim Betrieb an der Netzversorgung (AC) die Amplitude des vom Hochsetzsteller (LH, DH, SH, C2) von der Netzversorgung (AC) aufgenommenen Stromes, ansprechend auf eine Erkennung des Betriebes an der Netzversorgung (AC) durch die Steuerung (BCC), so eingestellt ist, dass eine Stromaufnahme durch den Hochsetzsteller (LH, DH, SH, C2) zumindest während der halben Dauer einer Netzhalbwelle erfolgt.

3. Elektronisches Vorschaltgerät nach Anspruch 1 oder 2, bei dem beim Betrieb an der Netzversorgung (AC) die Amplitude des vom Hochsetzsteller (LH, DH, SH, C2) von der Netzversorgung (AC) aufgenommenen Stromes proportional zur Versorgungsspannung ist.

4. Elektronisches Vorschaltgerät nach einem der vorangehenden Ansprüche, bei dem der Differenzierer (CD, RD) eine Serienschaltung aus einem Kondensator (CD) und zumindest einem Widerstand (RD) aufweist.

5. Elektronisches Vorschaltgerät nach einem der vorangehenden Ansprüche mit einer zu dem Widerstand (RD) des Differenzierers (CD, RD) parallel geschalteten Spitzenwerterfassungsschaltung (DS, CS).

6. Entladungslampe mit integriertem elektronischem Vorschaltgerät nach einem der vorhergehenden Ansprüche.

7. Verfahren zum wahlweisen Betrieb eines elektronischen Vorschaltgerätes einer Entladungslampe (CFL), das mit einem als Hochsetzsteller ausgebildeten Konverter (LH, DH, SH, C2) ausgestattet ist, direkt an einer Netzversorgung oder an einem Phasenanschnittdimmer, wobei Sprünge in der Versorgungsspannung (AC) durch einen zwischen eine Netzleitung (N, L) und das Bezugspotential (GND) des Vorschaltgerätes angeschlossenen Differenzierer (CD, RD) ausgekoppelt und an eine Steuerung (BCC) des Vorschaltgerätes gegeben werden, so dass die Steuerung (BCC) zwischen dem Betrieb am Phasenanschnittdimmer und an der Netzversorgung (AC) unterscheiden kann,
**dadurch gekennzeichnet, dass** der Hochsetzsteller (LH, DH, SH, C2) so gesteuert wird, dass er beim Betrieb an der Netzversorgung (AC), ansprechend auf eine Erkennung des Betriebs an der Netzversorgung (AC) durch die Steuerung (BCC), eine geringere Abschaltstromschwelle aufweist, so dass der Hochsetzsteller (LH, DH, SH, C2) einen Strom geringerer Amplitude aus der Netzversorgung aufnimmt als beim Betrieb an dem Phasenanschnittsdimmer.

## Claims

1. Electronic ballast with a converter (LH, DH, SH, C2) in the form of a step-up converter for selectively operating a discharge lamp (CFL) directly on a system supply (AC) or using a phase gating dimmer, jumps in the supply voltage being output by at least one differentiator (CD, RD), which is connected between a system line (N, L) and the reference potential (GND) of the ballast, and being passed on to a controller (BCC) of the ballast, so that the controller (BCC) can distinguish between operation using the phase gating dimmer and on the system supply (AC), **characterized in that** the controller (BCC) controls the step-up converter (LH, DH, SH, C2) in such a way that, during operation on the system supply (AC), in response to a detection of operation on the system supply (AC) by the controller (BCC), said step-up converter has a lower switch-off current threshold, so that the step-up converter (LH, DH, SH, C2) draws a current from the system supply which has a lower amplitude than during operation using the phase gating dimmer.

2. Electronic ballast according to Claim 1, in which, during operation on the system supply (AC), the amplitude of the current drawn by the step-up converter (LH, DH, SH, C2) from the system supply (AC), in response to a detection of the operation on the system supply (AC) by the controller (BCC) , is set in such a way that current is drawn by the step-up converter (LH, DH, SH, C2) at least over half the duration of a system half-cycle.

3. Electronic ballast according to Claim 1 or 2, in which, during operation on the system supply (AC), the amplitude of the current drawn by the step-up converter (LH, DH, SH, C2) from the system supply (AC) is proportional to the supply voltage.

4. Electronic ballast according to one of the preceding claims, in which the differentiator (CD, RD) has a series circuit comprising a capacitor (CD) and at least one resistor (RD).

5. Electronic ballast according to one of the preceding claims with a peak value detection circuit (DS, CS), which is connected in parallel with the resistor (RD) of the differentiator (CD, RD).

6. Discharge lamp with an integrated electronic ballast according to one of the preceding claims.

7. Method for selectively operating an electronic ballast of a discharge lamp (CFL), which is equipped with a converter (LH, DH, SH, C2) in the form of a step-up converter, directly on a system supply or using a phase gating dimmer, jumps in the supply voltage (AC) being output by a differentiator (CD, RD), which is connected between a system line (N, L) and the reference potential (GND) of the ballast, and being passed on to a controller (BCC) of the ballast, so that the controller (BCC) can distinguish between operation using the phase gating dimmer and on the system supply (AC), **characterized in that** the step-up converter (LH, DH, SH, C2) is controlled in such a way that, during operation on the system supply (AC), in response to a detection of operation on the system supply (AC) by the controller (BCC), said step-up converter has a lower switch-off current threshold, so that the step-up converter (LH, DH, SH, C2) draws a current from the system supply which has a lower amplitude than during operation using the phase gating dimmer.

## Revendications

1. Ballast électronique ayant un convertisseur ( LH, DH, SH, C2 ) constitué en survolteur pour faire fonctionner au choix une lampe ( CFL ) à décharge directement sur une alimentation ( AC ) du secteur ou sur un variateur à angle de phase, des sauts de la tension d' alimentation étant extraits par au moins un différentiateur ( CD, RD ) raccordé entre une ligne ( N, L ) du secteur et le potentiel ( GND ) de référence du ballast et envoyés à une commande du ( BCC ) du ballast de sorte que la commande ( BCC ) peut distinguer entre le fonctionnement sur le variateur à angle de phase et sur l' alimentation ( AC ) par le secteur,
**caractérisé en ce que** la commande ( BCC ) commande le survolteur ( LH, DH, SH, C2 ) de façon à ce que celui-ci ait, lors du fonctionnement sur l' alimentation ( AC ) par le secteur d' une manière qui correspond à une détection du fonctionnement sur l' alimentation ( AC ) par le secteur, par la commande ( BCC ) un seuil de courant d' interruption plus petit de sorte que survolteur ( LH, DH, SH, C2 ) reçoit un courant d' amplitude plus petite de l' alimentation par le secteur que lors du fonctionnement sur le variateur à angle de phase.

2. Ballast électronique suivant la revendication 1, dans lequel, lors du fonctionnement sur l' alimentation ( AC ) par le secteur, l' amplitude du courant absorbé de l' alimentation ( AC ) par le secteur par le survolteur ( LH, DH, SH, C2 ), en fonction d' une détection du fonctionnement sur l' alimentation ( AC ) par le secteur par la commande ( BCC ), est réglée de manière à obtenir une absorption du courant par le survolteur ( LH, DH, SH, C2 ) au moins pendant la demi-durée d' une demi-onde du secteur.

3. Ballast électronique suivant la revendication 1 ou 2, dans lequel, lors du fonctionnement sur l' alimentation ( AC ) par le secteur, l' amplitude du courant absorbé de l' alimentation ( AC ) par le secteur par le survolteur ( LH, DH, SH, C2 ) est proportionnelle à la tension d' alimentation.

4. Ballast électronique suivant l'une des revendications précédentes, dans lequel le différentiateur ( CD, RD ) comporte un circuit série composé d' un condensateur ( CD ) et d' au moins une résistance ( RD ).

5. Ballast électronique suivant l'une des revendications précédentes, comprenant un circuit ( DS, CS ) de détection de valeur de pointes, monté en parallèle à la résistance ( RD ) du différentiateur ( CD, RD ).

6. Lampe à décharge à ballast électronique intégré suivant l'une des revendications précédentes.

7. Procédé pour faire fonctionner au choix, un ballast électronique d' une lampe ( CFL ) à décharge, qui est équipée d' un convertisseur ( LH, DH, SH, C2 ) constitué en survolteur directement sur une alimentation par le secteur ou sur un variateur à angle de phase, des sauts de la tension ( AC ) d' alimentation étant extraits par un différentiateur ( CD, RD ) monté entre une ligne ( N, L ) du secteur et le potentiel ( GND ) de référence du ballast et étant envoyés à une commande ( BCC ) du ballast de sorte que la commande ( BCC ) peut distinguer entre le fonctionnement sur le variateur à angle de phase et sur l' alimentation ( AC ) par le secteur,
**caractérisé en ce que** l' on commande le survolteur ( LH, DH, SH, C2 ) de sorte que, lors du fonctionnement sur l' alimentation ( AC ) par le secteur conformément à une détection du fonctionnement sur l' alimentation ( AC ) par le secteur, par la commande BCC ) il y a un seuil de courant d' interruption plus petit de sorte que le survolteur ( LH, DH, SH, C2 ) reçoit de l' alimentation par le secteur un courant d' une amplitude plus petite que lors du fonctionnement sur le variateur à angle de phase.
